# EUROPEAN PATENT SPECIFICATION

(11) **EP 1 758 108 B1**
(45) Date of publication and mention of the grant of the patent: **02.07.2008**
(21) Application number: 05018622.0
(22) Date of filing: 26.08.2005
(51) Int. Cl.: G11B 7/24, G11B 23/00

(54) **Optical disc substrate and optical disc**
Substrat einer optischen Platte und optische Platte
Support de disque optique et disque optique

(43) Date of publication of application: 28.02.2007
(73) Proprietor: Mega Data GmbH, 40878 Ratingen (DE)
(72) Inventor: Chu, Yi-Lin, Hsinchu City 30073 (TW)
(74) Representative: Grünecker, Kinkeldey, Stockmair & Schwanhäusser Anwaltssozietät

(56) References cited:
- EP-A- 0 994 470
- EP-A- 0 997 891
- EP-A- 1 291 874

## Description

### BACKGROUND OF THE INVENTION

### a) Field of the Invention

The invention relates to an optical disc substrate and an optical disc, including such a disc substrate.

### b) Description of the Related Art

An optical disc can store data with different formats, such as image, computer digital image, and text; therefore, an optical disc is the most convenient storage medium among the new generation of optical storage media. In addition, an optical disc can be applied in many fields, including library archives, data backup, electronic publication, image data storage, and personal medical record management. There are a plurality of optical disc types available which are classified in general according to their read/write characteristics - in particular, all types may be multiply read, some are read-only, some may be written once and others may be multiply written. The invention is applicable to all such types.

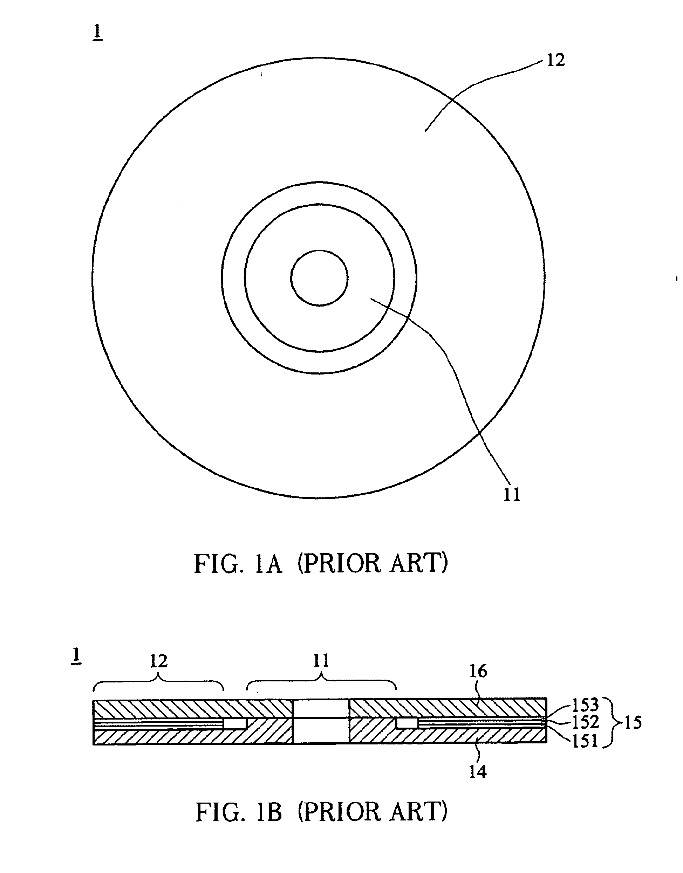

FIG. 1A, is an overhead view of a conventional optical disc 1. The optical disc 1 is annular and is divided into a supporting portion 11 on the inner side of the circle and a recording portion 12 on the outer side of the circle. FIG. 1B illustrates the detailed structure of the optical disc 1; the optical disc 1 includes a substrate 14, a paint layer 15, and a compensation sheet 16. The paint layer 15 includes a recording layer 151, a reflection layer 152, and a protection layer 153, which are sequentially stacked on the substrate 14 to form the recording portion 12. The compensation sheet 16 and the substrate 14 are bonded together to form the optical disc 1. The substrate 14 has a thickness of 0.6mm and the compensation sheet 16 also has a thickness of 0.6mm,so that the supporting portion 11 of the optical disc 1 has a thickness of 1.2mm for an optical disc drive to clamp thereto.

EP-A-1 291 874 describes an optical disc that comprises a substantially transparent substrate, one surface of which carries optical data structures comprising pits and lands arranged in a radial pattern outward of a clamp area of the disc. In the clamp area a protrusion structure is provided above the first surface to create a clamp thickness greater than the thickness of the rest of the disc. Only a portion of the clamp area is covered by the protrusions, which emulate a disc having a clamp area of large thickness.

However, there are a number of problems that arise when manufacturing optical discs. The most important problems that need to be addressed are:-
I) Warping
   The disc needs to be plane so that the angle of incidence of the laser beam is constant; a rotating optical disc that is warped will produce irregular and unpredictable scattering of the reflected beam making reading/writing erroneous or impossible. Furthermore, the disc must remain plane throughout the range of revolutions that it is subjected to during normal use.
II) Birefringence
   Birefringence is defined as the distortion of light caused by stresses set up during the manufacturing process within the plastic material forming the optical disc. Manufacturers must measure birefringence and insure that their moulded discs are within specification. Failure to do so produces discs whose error rate is unacceptably high.
III) Material and Production Costs
   Material costs are obviously reduced when less material is used in producing the product; furthermore, simplifying the production process and the complexity of the product itself, reduces the cost of producing the product. This becomes significant given the numbers in which such optical discs are produced.
IV) Airborne dust/dirt particles
   Optical discs are consumer products that typically must also function in normal domestic environments. The presence of airborne dust/dirt particles can contribute to a higher error quota when reading/writing such optical discs.
V). Resonance or vibration effects
   When the optical disc rotates, resonance or vibration effects can be generated such that the angle of incidence of the laser beam becomes variable so producing irregular and unpredictable scattering of the reflected beam making reading/writing erroneous or impossible
   It is the object of the present invention to solve these problems in an optimum manner.

### BRIEF SUMMARY OF THE INVENTION

The invention solves the aforementioned problems in the following way.

The optical disc according to the present invention consists of a substrate that has a central aperture together with a clamp area that surrounds it concentrically and is overlaid on it. Surrounding the clamp area is the concentric information area. The optical disc of the invention includes a paint layer formed on the information area surface of the optical disc substrate for data recording. The clamp area has a thickness that is greater than the thickness of the remainder of the disc so forming a disc shaped protrusion area that is parallel to the remainder of the disc. The material constituting the protrusion structure of the clamp area is formed into a plurality of indentations at the outer periphery so providing a tooth-like shaped profile that has inclined surfaces abutting onto the information area surface. It is the presence of the plurality of indentations that forms the foundation of the invention.

Because of the presence of the plurality of tooth-like shaped indentations, the internal stresses within the optical disc resulting from the injection process and the subsequent cooling process, are lower. This leads to lower birefringence; the tendency of the structure to warp is reduced because of the 'stiffening' effect of the indentations, especially at high rotational speeds of the disc and it is clear that less material is needed compared to the amount needed in the formation of a simple plain disc-shaped clamp area. Additionally, a one-piece moulded structure eliminates the necessity of bonding surfaces together simplifying the manufacturing process and providing a more rigid structure. Furthermore, indentations having an inclined plane onto the protruding portions allow the injection mould to be filled with the plasticized material more uniformly so making the injection moulding process easier and providing a 'burr free' boundary between the upper and lower portions. The presence of the rotating indentations generates air currents that are parallel to, and stream across, the information area so the tendency of dust/dirt particles settling on the information area is minimised. The presences of these air currents also provide an increased damping factor that reduces the probability of resonances/vibrations within the system. The presence of such unwanted resonances/vibrations can influence the tracking and the focussing of the laser beam.

Extensive experimental research has been conducted in order to determine the optimum values of the various parameters and these values constitute the preferred values of the specific characteristics detailed in the claims.

The net result of the application of the invention is that a better product is produced at a lower cost and the number of discs rejected during the quality control phase is significantly reduced.

### BRIEF DESCRIPTION OF THE DRAWINGS

FIG. 1A illustrates a top view of a conventional optical disc
FIG. 1B illustrates a sectional view of a conventional optical disc
FIG. 2A illustrates a top view of an optical disc substrate according to a preferred embodiment of the invention
FIG. 2B illustrates a sectional view of an optical disc substrate according to a preferred embodiment of the invention
FIG. 2C illustrates a sectional view of an optical disc substrate according to another preferred embodiment of the invention
FIG. 3 illustrates a sectional view of an optical disc according to a preferred embodiment of the invention
FIG. 4 illustrates a sectional view of an optical disc according to another preferred embodiment of the invention
FIG. 5A is an optical characteristic diagram showing relative double refraction index (birefringence) of a conventional optical disc
FIG. 5B is an optical characteristic diagram showing relative double refraction index (birefringence) of an optical disc according to a preferred embodiment of the invention

### DETAILED DESCRIPTION OF THE INVENTION

The optical disc substrate and optical disc according to a preferred embodiment of the invention will be described below with reference to the drawings, wherein the reference numerals denote the corresponding components.

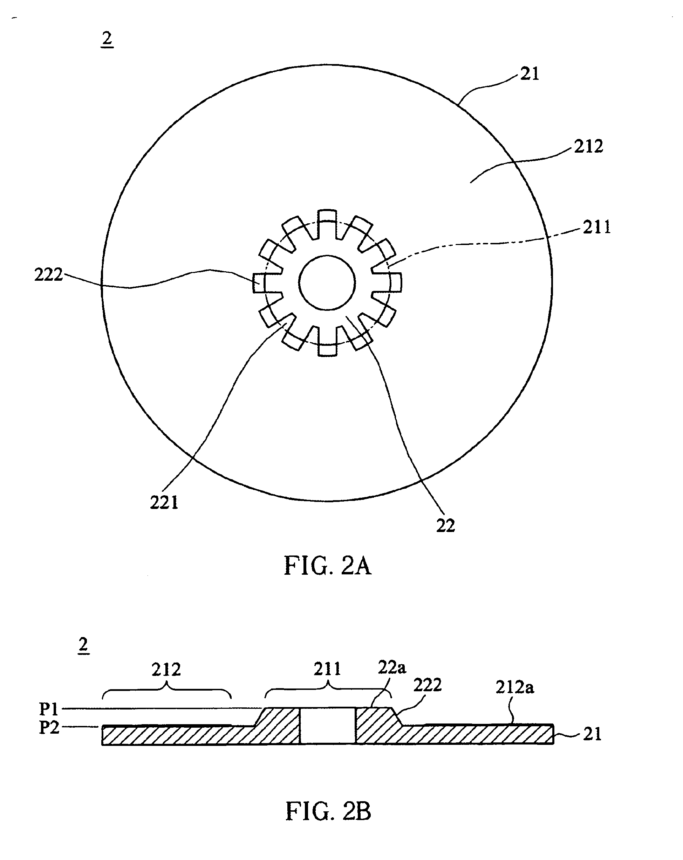

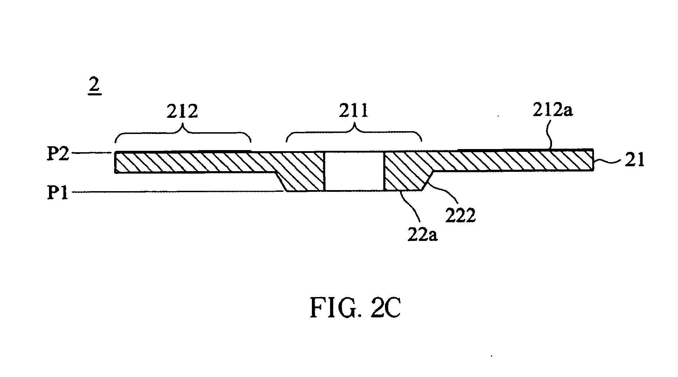

As shown in FIGs. 2A and 2B, an optical disc substrate 2 according to a preferred embodiment of the invention includes an annular substrate 21 and a protruding portion 22. The annular substrate 21 is provided with a supporting portion 211 on the inner side and a recording portion 212 on the outer side. The recording portion 212 has a recording surface 212a, on which a paint layer, which is described later, is formed. The protruding portion 22 is overlaid onto the supporting portion 211 and has a supporting surface 22a. The thickness between 0.66 mm and 1.6 mm is reached by lapping the protruding portion 22 over the supporting portion 211 of the annular substrate 21. Such thickness allows the optical disc drive to clamp onto the supporting surface 22a for read/write operations when the optical disc is placed in the optical disc drive. On the other hand, the recording portion 212 of the annular substrate 21 has a thickness between 0.55 mm and 0.65 mm, and hence, the supporting surface 22a and the recording surface 212a are not coplanar. In other words, the plane P1, on which the supporting surface 22a is located, differs from the plane P2, on which the recording surface 212a is located. The two planes can be on the same side of the annular substrate 12 as shown in FIG. 2B, or they can be on different sides of the annular substrate 12 as shown in FIG. 2C. In addition, a plurality of indentations 221, which are formed around the rim of the protruding portion in such a way that the protruding portion 22 could be a gear-wheel-like shape or a petal-like shape, are provided on the outer periphery of the protruding portion 22. It is to be noted that the annular substrate 21 and the protruding portion 22 can be moulded in one piece, for example by injection moulding, or can be assembled by bonding to one another whereby moulding in one piece is preferred. The diameter of the annular substrate 21 is between 70 mm and 90 mm with a preference of 80 mm, or between 110 mm and 130 mm with a preference of 120 mm. Other dimensions are also possible.

The optical disc substrate according to the embodiment of the invention further includes an inclined plane 222 extending from the plane P1 on which the supporting surface 22a is located to the plane P2 on which the recording surface 212a is located, and is positioned between the outer periphery of the protruding portion 22 and the recording portion 212.

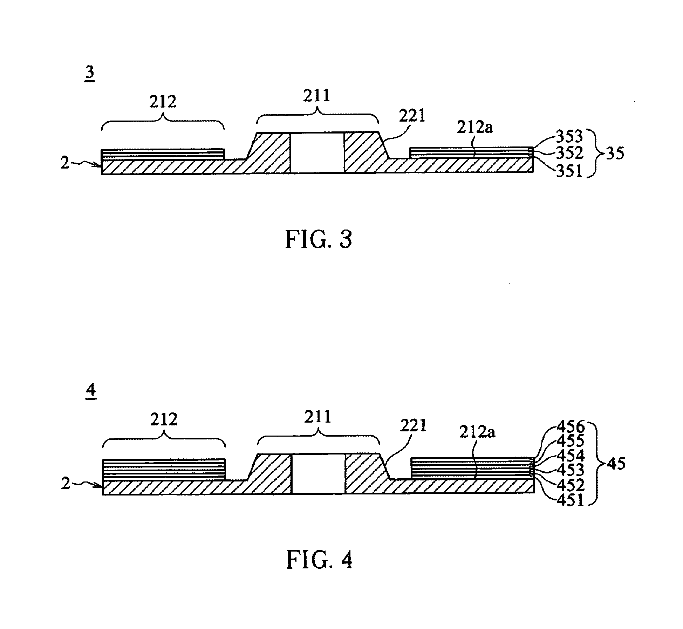

FIGs. 3 and 4 illustrate two optical discs 3 and 4, respectively, according to the preferred embodiments of the invention. The optical disc 3 and 4 each includes an optical disc substrate 2 and a paint layer 35, 45, respectively. The structural characteristic of the optical disc substrate 2 is as aforementioned and is not further described herein, and the paint layer 35 is formed on the recording surface 212a for recording data. Different optical discs with paint layers 35, 45 of different compositions are used in different applications. For example, the paint layer 35 shown in FIG. 3 is formed by stacking a recording layer 351, a reflection layer 352, and a protection layer 353 sequentially on the recording surface 212a, wherein the recording layer 351 is composed of dyes and the reflection layer 352 is composed of a metallic type material. The paint layer 45 shown in FIG. 4 is formed with a first dielectric layer 451, a recording layer 452, a second dielectric layer 453, an insulation layer 454, a reflection layer 455, and a protection layer 456 sequentially being stacked on the recording surface 212a, wherein the first dielectric layer 451 and the second dielectric layer 453 are composed of a low-dielectric constant type material, the recording layer 452 (phase change layer) is composed of an alloy type material between its upper and lower separation layers, the insulation layer 454 is composed of a metallic or a non-metallic type material, and the reflection layer 455 is composed of a metallic type material. The optical disc 4 made thereof is a phase change type optical disc.

The optical discs 3 and 4 belong to different categories of optical disc. The invention applies and is not limited to such categories and includes double sided optical discs, dual layer optical discs and double sided dual layer optical discs (i.e. four recording surfaces).

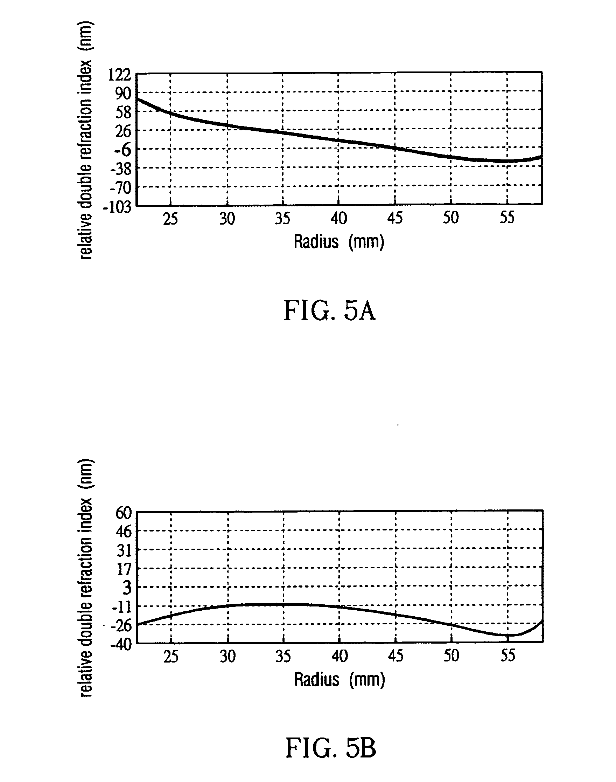

Besides fulfilling the requirement for structural rigidity and resistance to warping, the optical disc substrate and the optical disc of the invention also have better optical characteristics. Referring to FIGs. 5A and 5B, FIG. 5A is an optical characteristic diagram illustrating the relative double refraction index (birefringence) of an optical disc without the indentations 221, and FIG. 5B is an optical characteristic diagram illustrating the relative double refraction index of an optical disc of the invention. The average values of the relative double refraction index for conventional optical discs with radii of 22.8 mm, 40.0 mm, and 57.3 mm are 74 nm, 10 nm, and -25 nm, respectively, while the average values of relative double refraction index for optical discs according to the invention with the same radii are -19 nm, -8 nm, and -24 nm, respectively, which are lower than that of the conventional optical discs and thereby have much better optical characteristics.

According to the optical disc substrate and the optical disc of the invention, the lapped thickness of the supporting portion of the optical disc substrate over the protruding portion is large enough to be directly clamped by the optical disc drive, and so a compensation sheet is not needed to increase the thickness of the optical disc. Also, the rigidity of the optical disc substrate with a thicker supporting portion can prevent the annular substrate from warping, so that the optical disc substrate can be manufactured more easily and a higher yield can be obtained. The indentations of the protruding portion reduce the material cost on manufacturing the optical disc substrate whilst maintaining the rigidity of the optical disc substrate, and the internal stress of the optical disc substrate is thereby lowered because the plasticized process is more homogeneous; hence, the optical disc substrate has more perfect optical characteristics. Moreover, the inclined plane on the outer periphery of protruding portion allows the mould to be filled with the plasticized material more uniformly during the injection moulding process, which reduces the output of products that are rejected during the quality control phase, and which in turn lowers the production cost.

## Claims

1. An optical disc substrate (2) having a central aperture, a clamp area (22) substantially concentrically surrounding the central aperture, and an information area (212) substantially concentrically surrounding the clamp area (22), the clamp area (22) being of larger thickness than the information area (212)
**characterised in that**
the material of the clamp area (22) which protrudes in height beyond the information area (212) is formed into a plurality of indentations (221) at its outer periphery to provide a tooth-like shaped profile.

2. Optical disc substrate (2) according to claim 1
**characterised in that**
the tooth-like shaped profile has inclined surfaces (222).

3. Optical disc substrate (2) according to claim 2
**characterised in that**
the number of indentations (221) is more than 3.

4. Optical disc substrate (2) according to claim 3
**characterised in that**
the angle of inclination of the profile (222) is between 20° and 60°, preferably 30°, so that the inclined edge abuts against the information area (12) at a preferable angle of 150°.

5. Optical disc substrate (2) according to any of claims 1 - 4
**characterised in that**
the profile is of gear-wheel-like or petal-like form.

6. Optical disc substrate (2) according to any of claims 1 - 5
**characterised in that**
the clamp area (22) has a thickness greater than that of the information area (212), preferably two times.

7. Optical disc substrate (2) according to any of claims 1 - 6
**characterised in that**
the clamp area protrusion structure (22) and the remainder of the disc substrate (21) are moulded in one piece

8. Optical disc substrate (2) according to any of claims 1-7
**characterised in that**
the clamp area (22) protrusion structure either extends over the information area (212) surface side or over the opposite surface side.

9. Optical disc substrate (2) with information areas (212, 212a) on both surfaces having clamp area protrusion structures (22), as defined in any of claims 1-7, that are provided on both surfaces.

10. An optical disc (3, 4) including a substrate (2) according to any of clams 1 - 9 and a paint layer (35, 45) formed on the information area (212) surface for recording data.

## Patentansprüche

1. Optisches Plattensubstrat (2) mit einer mittigen Öffnung, einem Klemmbereich (22), der die mittige Öffnung im Wesentlichen konzentrisch umgibt, und einem Informationsbereich (212), der den Klemmbereich (22) im Wesentlichen konzentrisch umgibt, wobei der Klemmbereich (22) eine größere Dicke hat als der Informationsbereich (212),
**dadurch gekennzeichnet, dass**
das Material des Klemmbereiches (22), das in der Höhe über den Informationsbereich (212) hinaus vorsteht, an seinem Außenumfang in einer Vielzahl von Einschnitten (221) ausgebildet ist, so dass ein zahnartig geformtes Profil entsteht.

2. Optisches Plattensubstrat (2) nach Anspruch 1,
**dadurch gekennzeichnet, dass**
das zahnartig geformte Profil schräge Flächen (222) aufweist.

3. Optisches Plattensubstrat (2) nach Anspruch 2,
**dadurch gekennzeichnet, dass**
die Anzahl von Einschnitten (221) mehr als drei beträgt.

4. Optisches Plattensubstrat (2) nach Anspruch 3,
**dadurch gekennzeichnet, dass**
der Neigungswinkel des Profils (222) zwischen 20° und 60°, vorzugsweise 30°, beträgt, so dass die schräge Kante in einem bevorzugten Winkel von 150° auf den Informationsbereich (12) auftrifft.

5. Optisches Plattensubstrat nach einem der Ansprüche 1 - 4,
**dadurch gekennzeichnet, dass**
das Profil zahnradartige oder blütenblattartige Form hat.

6. Optisches Plattensubstrat (2) nach einem der Ansprüche 1 - 5,
**dadurch gekennzeichnet, dass**
der Klemmbereich (22) eine Dicke hat, die größer ist als die des Informationsbereiches (212), vorzugsweise zweimal so groß.

7. Optisches Plattensubstrat (2) nach einem der Ansprüche 1 - 6,
**dadurch gekennzeichnet, dass**
die vorstehende Struktur (22) des Klemmbereiches und der Rest des Plattensubstrats (21) in einem Stück geformt sind.

8. Optisches Plattensubstrat (2) nach einem der Ansprüche 1 -7,
**dadurch gekennzeichnet, dass**
die vorstehende Struktur des Klemmbereiches (22) sich entweder über die Seite der Oberfläche des Informationsbereiches (212) oder über die Seite der gegenüberliegenden Oberfläche erstreckt.

9. Optisches Plattensubstrat (2) mit Informationsbereichen (212, 212a) an beiden Oberflächen, die vorstehende Strukturen (22) eines Klemmbereiches nach einem der Ansprüche 1 - 7 aufweisen, die an beiden Flächen vorhanden sind.

10. Optische Platte (3, 4), die ein Substrat (2) nach einem der Ansprüche 1 - 9 sowie eine Farbschicht (35, 45) enthält, die an der Oberfläche des Informationsbereiches (212) zum Aufzeichnen von Daten ausgebildet ist.

## Revendications

1. Substrat de disque optique (2) ayant une ouverture centrale, une zone de préhension (22) entourant sensiblement concentriquement l'ouverture centrale, et une zone d'information (212) entourant sensiblement concentriquement la zone de préhension (22), la zone de préhension (22) étant d'une épaisseur plus importante que la zone d'information (212),
**caractérisé en ce que**:
le matériau de la zone de préhension (22) qui fait saillie en hauteur au-delà de la zone d'information (212) est formé en une pluralité d'indentations (221) à sa périphérie externe afin de présenter un profil de forme semblable à des dents.

2. Substrat de disque optique (2) selon la revendication 1, **caractérisé en ce que** le profil de forme semblable à des dents a des surfaces inclinées (222).

3. Substrat de disque optique (2) selon la revendication 2, **caractérisé en ce que** le nombre d'indentations (221) est supérieur à 3.

4. Substrat de disque optique (2) selon la revendication 3, **caractérisé en ce que** l'angle d'inclinaison du profil (222) est compris entre 20° et 60°, de préférence de 30°, de sorte que le bord incliné vient en butée contre la zone d'information (12) à un angle préférable de 150°.

5. Substrat de disque optique (2) selon l'une quelconque des revendications 1 à 4, **caractérisé en ce que** le profil a une forme semblable à une roue dentée ou une forme semblable à des pétales.

6. Substrat de disque optique (2) selon l'une quelconque des revendications 1 à 5, **caractérisé en ce que** la zone de préhension (22) a une épaisseur plus importante que celle de la zone d'information (212), de préférence deux fois.

7. Substrat de disque optique (2) selon l'une quelconque des revendications 1 à 6, **caractérisé en ce que** la structure en saillie de la zone de préhension (22) et le reste du substrat de disque (21) sont moulés en une pièce.

8. Substrat de disque optique (2) selon l'une quelconque des revendications 1 à 7, **caractérisé en ce que** la structure en saillie de la zone de préhension (22) s'étend soit sur le côté de la surface de la zone d'information (212), soit sur le côté de la surface opposée.

9. Substrat de disque optique (2) avec des zones d'information (212, 212a) sur les deux surfaces ayant des structures en saillie de zone de préhension (22), telles que définies dans l'une quelconque des revendications 1 à 7, qui sont prévues sur les deux surfaces.

10. Disque optique (3, 4) comprenant un substrat (2) selon l'une quelconque des revendications 1 à 9 et une couche de peinture (35, 45) formée sur la surface de la zone d'information (212) pour enregistrer des données.
